# EUROPÄISCHE PATENTSCHRIFT

(11) **EP 0 731 017 B1**
(45) Veröffentlichungstag und Bekanntmachung des Hinweises auf die Patenterteilung: **22.10.1997**
(21) Anmeldenummer: 95119913.2
(22) Anmeldetag: 16.12.1995
(51) Int. Cl.: B62K 25/08

(54) **Teleskopische Vorderradaufhängung für ein Motorrad**
Telescopic front suspension for a motorcycle
Suspension télescopique pour roue avant de motocyclette

(30) Priorität: 09.03.1995 DE 19508499
(43) Veröffentlichungstag der Anmeldung: 11.09.1996
(73) Patentinhaber: Bayerische Motoren Werke Aktiengesellschaft, 80788 München (DE)
(72) Erfinder: Berkmann, Franz, D-88239 Wangen (DE)

(56) Entgegenhaltungen:
- DE-C- 3 513 974
- DE-U- 9 404 873
- US-A- 5 069 467

## Beschreibung

Die Erfindung betrifft eine teleskopische Vorderradaufhängung für ein Motorrad nach dem Oberbegriff des Hauptanspruchs.

Es ist bereits bekannt, den ungefederten Teil einer teleskopischen Vorderradaufhangung eines Motorrads über ein Gelenkviereck mit rahmenfesten Teilen des Motorrads zu verbinden. Die DE 35 13 974 C1 beschreibt eine solche Vorderradaufhängung für ein Motorrad, deren gefederter Teil über ein Universalgelenk, vorzugsweise ein Kugelgelenk, um eine virtuelle Lenkachse drehbar an einem rahmenfesten Teil des Motorrads angelenkt ist. Der ungefederte Teil der teleskopischen Vorderradaufhängung ist ebenfalls über ein Universalgelenk um die virtuelle Lenkachse drehbar unter Zwischenschaltung eines Gelenkvierecks mit einem rahmenfesten Teil des Motorrads verbunden. Das Gelenkviereck hat zwei rahmenfeste Drehachsen, über die zwei Lenker schwenkbar angelenkt sind. Mit ihren anderen Enden sind diese Lenker über Drehachsen mit einer Koppel des Gelenkvierecks schwenkbar verbunden. An dieser Koppel ist der ungefederte Teil der Teleskopgabel über das Universalgelenk angebracht. Die Verbindung beider Universalgelenke ergibt die virtuelle Lenkachse, um die die Vorderradaufhängung drehbar ist.

Eine solche Vorderradaufhängung für ein Motorrad besitzt einen degressiven Bremsnickausgleich über dem Einfederweg und ein träges Ansprechverhalten der Federung.

Deshalb ist es Aufgabe der Erfindung, das Gelenkviereck der teleskopischen Vorderradaufhängung so zu gestalten, daß die Vorderradfederung sensibel auf Bodenunebenheiten anspricht und dabei der Bremsnickausgleich über dem Federweg progressiv verläuft.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung wird das Gelenkviereck so gestaltet, daß seine rahmenfesten Drehachsen, in Richtung der Längsachse des Motorrades gesehen, vor den Drehachsen der Koppel liegen.

Bei bevorzugten Ausführungen der Erfindung schneiden sich die Längsachsen der Lenker des Gelenkvierecks, die an den rahmenfesten Teilen angelenkt sind, in ihrer Verlängerung oder sie liegen parallel. Besitzen die Längsachsen der Lenker einen Schnittpunkt, dann müssen die Lenker so angeordnet sein, daß der Schnittpunkt hinter den Drehachsen der Koppel liegt.

Eine solche Gestaltung des Gelenkvierecks einer teleskopischen Vorderradaufhängung hat den Vorteil, daß die Stoßdifferenzwinkel, vor allem im ausgefederten Zustand, klein sind. Stoßrichtung und Einfederrichtung entsprechen sich im wesentlichen, was ein gutes Ansprechverhalten der Federung ergibt, weil die Kraftkomponente in Bahnrichtung verhältnismäßig groß ist. Desweiteren wird durch ein so gestaltetes Gelenkviereck ein Bremsnickausgleich erreicht, der im wesentlichen vorteilhafterweise Werte von 0% in der Normallage bis circa 70% in der eingefederten Lage annimmt. Und zwar deshalb, weil die Momentanpolbahn des Gelenkvierecks hinter den Koppelgelenken liegt und während der Einfederbewegung ansteigt. Dadurch steigt der Gesamtmomentanpol für das Vorderrad während der Einfederbewegung ebenfalls an.

Man erhält durch das so gestaltete Gelenkviereck einen über dem Einfederweg progressiv ansteigenden oder konstanten Nickausgleich, bei einer vom Lastfall weitgehend unabhängigen, auf das Vorderrad wirkenden Federrate, was wiederum eine optimale Dämpferabstimmung zuläßt. Es ist mit dieser Anordnung vorteilhafterweise auch jede Art von Raderhebungskurve bzw. Nickausgleichsverlauf möglich.

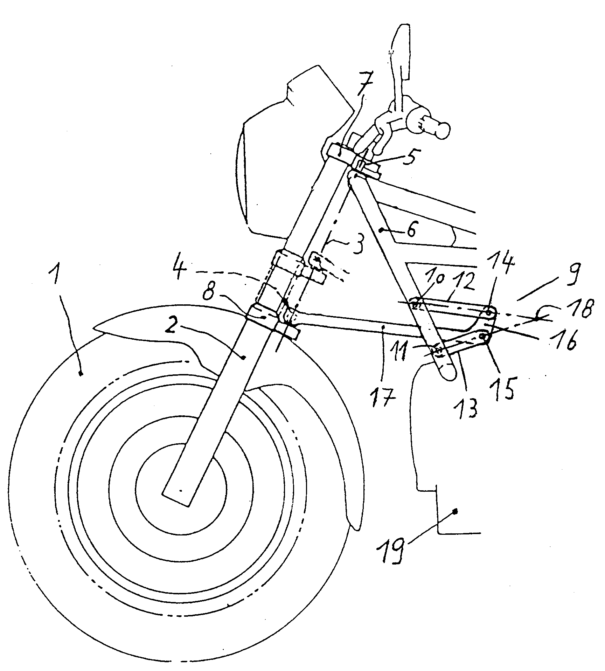

Ein Ausführungsbeispiel der Erfindung ist in der nachfolgenden Beschreibung und der zugehörigen Zeichnung näher dargestellt. Die einzige Figur zeigt eine Seitenansicht einer teleskopischen Vorderradaufhängung für ein Motorrad entsprechend der Erfindung.

Ein Vorderrad 1 eines Motorrads wird in einer Teleskopgabel 2 geführt. Die Teleskopgabel 2 ist, um eine virtuelle, strichpunktiert gezeichnete Lenkachse 3 drehbar, durch zwei Kugelgelenke 4, 5 mit dem Motorradrahmen 6 verbunden. Das obere Kugelgelenk 5 verbindet direkt eine obere Gabelbrücke 7 mit dem Motorradrahmen 6, während das untere Kugelgelenk 4 eine untere Gabelbrücke 8 über ein Gelenkviereck 9 mit dem Motorradrahmen 6 verbindet. Das Gelenkviereck 9 besteht aus zwei durch rahmenfeste Drehachsen 10, 11 direkt am Motorradrahmen 6 angelenkten Lenkern 12, 13 als Schwingen, die wiederum an ihren freien Enden über weitere Drehachsen 14, 15 durch eine Koppel 16 miteinander verbunden sind. Die Koppel 16 ist als Winkelhebel ausgebildet, dessen langer Schenkel 17 an seinem anderen Ende über das Kugelgelenk 4 an der unteren Gabelbrücke 8 angelenkt ist.

Das Gelenkviereck 9 ist nun gemäß der Erfindung so gestaltet, daß die rahmenfesten Drehachsen 10, 11 des Gelenkvierecks 9, in Richtung der nicht gezeichneten Längsachse des Motorrads gesehen, vor den weiteren Drehachsen 14, 15 der Koppel 16 liegen. Die Lenker 12, 13 sind bezüglich ihrer Länge so dimensioniert, daß sich ihre Längsachsen in ihrer Verlängerung schneiden und daß ihr virtueller Schnittpunkt 18, in Richtung der Längsachse des Motorrads gesehen, hinter den weiteren Drehachsen 14, 15 der Koppel 16 liegt.

Es ist selbstverständlich für eine solche Vorderradaufhängung, daß das Gelenkviereck 9 so ausgebildet ist, daß in der gezeichneten Stellung für Geradeausfahrt, bei einer Einfederbewegung (gestrichelt dargestellt), eine Bewegung der Lenker 12, 13 und Koppel 16 des Gelenkvierecks 9 nur in der Zeichenebene möglich ist. Aus der Zeichenebene heraus oder in diese hinein besteht für das Gelenkviereck 9 aufgrund der Auslegung der Gelenke kein Freiheitsgrad. Ebenso ist selbstverständlich, daß die rahmenfesten Drehachsen 10, 11 nicht nur am Motorradrahmen 6, sondern auch an sonstigen rahmenfesten Teilen des Motorrads, wie zum Beispiel einem Motor 19, angebracht sein können.

## Patentansprüche

1. Teleskopische Vorderradaufhängung für ein Motorrad, deren ungefederter Teil über ein Universalgelenk, vorzugsweise ein Kugelgelenk (4), um eine virtuelle Lenkachse (3) drehbar, unter Zwischenschaltung eines Gelenkvierecks (9) mit einem rahmenfesten Teil des Motorrads verbunden ist, wobei über zwei rahmenfeste Drehachsen (10, 11) des Gelenkvierecks (9) zwei Lenker (12, 13) schwenkbar angelenkt sind, die mit ihren anderen Enden über weitere Drehachsen (14, 15) mit einer Koppel (16) des Gelenkvierecks (9) schwenkbar verbunden sind, an der wiederum der ungefederte Teil der teleskopischen Vorderradaufhängung über das Universalgelenk angebracht ist, dadurch gekennzeichnet, daß die rahmenfesten Drehachsen (10, 11) des Gelenkvierecks (9) in Richtung der Längsachse des Motorrads gesehen vor den weiteren Drehachsen (14, 15) der Koppel (16) liegen.

2. Vorderradaufhängung für ein Motorrad nach Anspruch 1, dadurch gekennzeichnet, daß sich die Längsachsen der Lenker (12, 13) in ihrer Verlängerung schneiden und daß der Schnittpunkt (18) der Verlängerungen der Längsachsen der Lenker (12, 13) in Richtung der Längsachse des Motorrads gesehen hinter den weiteren Drehachsen (14, 15) der Koppel (16) liegt.

3. Vorderradaufhängung für ein Motorrad nach Anspruch 1, dadurch gekennzeichnet, daß sich die Längsachsen der Lenker (12, 13) in ihrer Verlängerung nicht schneiden.

## Claims

1. A telescopic front-wheel suspension for a motor-cycle having a non-sprung part connected via a universal joint, preferably a ball-and-socket joint (4) with interposition of a four-bar linkage (9), to a part of the motor-cycle fixed to the frame so as to be rotatable around a virtual steering axle (3), two guide rods (12, 13) being pivotably connected via two pivots (10, 11) of the four-bar linkage (9) secured to the frame, the other ends of the guide rods being pivotably connected by other pivots (14, 15) to a connecting rod (16) of the four-bar linkage (9) to which the non-sprung part of the telescopic front-wheel suspension is also connected by the universal joint, characterised in that the pivots (10, 11) of the four-bar linkage (9) connected to the frame, as seen in the direction of the longitudinal axis of the motor-cycle, lie in front of the pivots (14, 15) of the connecting rod (16).

2. A front-wheel suspension for a motor-cycle according to claim 1, characterised in that the longitudinal axes of the guide rods (12, 13) intersect in prolongation and the point of intersection (18) of the prolongations of the longitudinal axes of the guide rods (12, 13), as seen in the direction of the longitudinal axis of the motor-cycle, lie behind the pivots (14, 15) of the connecting rod (16).

3. A front-wheel suspension for a motor-cycle according to claim 1, characterised in that the longitudinal axes of the guide rods (12, 13) do not intersect in prolongation.

## Revendications

1. Suspension télescopique de roue avant de motocyclette dont la partie non suspendue est reliée par une articulation universelle, de préférence une articulation à rotule (4) de manière pivotante autour d'un axe de direction (3) virtuel, avec interposition d'un rectangle articulé (9) à une partie solidaire du châssis de la motocyclette,
• deux bras (12, 13) du rectangle articulé (9), étant articulés de manière basculante par l'intermédiaire de deux axes de rotation (10, 11) solidaires du châssis,
• les autres extrémités de ces bras étant reliées de manière basculante par d'autres axes de rotation (14, 15) à une bielle (16) du rectangle articulé (9), à laquelle est reliée la partie non suspendue de la suspension télescopique de roue avant par l'articulation universelle,
caractérisée en ce que
les axes de rotation (10, 11) du rectangle articulé (9) solidaires du châssis se situent devant les autres axes de rotation (14, 15) de la bielle (16) dans la direction de l'axe longitudinal de la motocyclette.

2. Suspension de roue avant de motocyclette selon la revendication 1,
caractérisée en ce que
les prolongements des axes longitudinaux des bras (12, 13) se coupent et ce point d'intersection (18) se situe derrière les autres axes de rotation (14, 15) de la bielle (16) dans la direction de l'axe longitudinal de la motocyclette.

3. Suspension de roue avant de motocyclette selon la revendication 1,
caractérisée en ce que
les prolongements des axes longitudinaux des bras (12, 13) ne se coupent pas.
